Europäisches Patentamt

European Patent Office

Office européen des brevets

(11) Veröffentlichungsnummer: **0 355 588**
**A2**

(12) ## EUROPÄISCHE PATENTANMELDUNG

(21) Anmeldenummer: 89114741.5

(22) Anmeldetag: 09.08.89

(51) Int. Cl.⁴: **F16L 1/12**

(30) Priorität: 23.08.88 NO 883771

(43) Veröffentlichungstag der Anmeldung:
28.02.90 Patentblatt 90/09

(84) Benannte Vertragsstaaten:
**DE GB**

(71) Anmelder: **Siemens Aktiengesellschaft**
**Wittelsbacherplatz 2**
**D-8000 München 2(DE)**

(72) Erfinder: **Thoresen, Jon**
**Gudesgt. 13**
**N-3600 Kongsberg(NO)**

(54) **Vorrichtung zum stufenweisen Drehen mindestens eines Gegenstandes, insbesondere einer Schraube eines zweiteiligen Verbindungselements zum Zusammenfügen zweier Rohre unter Wasser.**

(57) Zum stufenweisen Drehen mindestens eines Gegenstandes, beispielsweise zweier Schrauben eines zweigeteilten Verbindungselements für das ferngesteuerte Zusammenfügen von Rohren unter Wasser, ist ein Rahmen (1) mit einer Greifvorrichtung (46) zur drehfesten Verbindung mit dem Gegenstand, eine die Greifvorrichtung tragende und im Rahmen (1) gelagerte Kupplungseinheit (12) sowie eine Antriebsvorrichtung (51, 52) zum Drehen der Greifvorrichtung (46) über die Kupplungseinheit vorgesehen. Die Kupplungseinheit (12) ist kipp- und verschiebbar im Rahmen (1) gelagert. Sie umfaßt ein erstes Ringteil (31 und ein zweites Ringteil (32), wobei die Ringteile konzentrisch zu ihrer Drehachse angeordnet und axial verschiebbar sind und jeweils zusammenwirkende Zahnkränze haben, die in einer ersten Position der Kupplungsteile miteinander in Eingriff stehen und in einer zweiten Position außer Eingriff sind. Das zweite Ringteil (32) ist mit der Antriebsvorrichtung verbunden und das erste Ringteil (31) mit der als Hülse ausgebildeten Greifvorrichtung (46). Die Antriebsvorrichtung kann bei aufeinanderfolgenden Drehvorgängen wechselweise entgegengesetzte Drehmomente auf das zweite Ringteil (32) ausüben.

FIG 3

FIG 4

## Vorrichtung zum stufenweisen Drehen mindestens eines Gegenstandes, insbesondere einer Schraube eines zweiteiligen Verbindungselements zum Zusammenfügen zweier Rohre unter Wasser

Die Erfindung zieht sich auf eine Vorrichtung zum stufenweisen Drehen mindestens eines Gegenstandes, insbesondere einer Schraube eines zweiteiligen Verbindungselemts zum Zusammenfügen zweier Rohre unter Wasser, bei der für jeden Gegenstand an einem Rahmen eine Greifvorrichtung für eine drehfeste Verbindung mit dem Gegenstand und eine im Rahmen untergebrachte Kupplungseinheit angeordnet sind, die mit der Greifvorrichtung verbunden ist und diese trägt, wobei mit der Kupplungseinheit eine Antriebsvorrichtung zum Drehen der Greiffvorrichtung verbunden ist.

Einrichtungen dieser Art werden z.B. in der Offshore-Ölförderung verwendet. Zu Beginn kann sich das erste Installationsteil auf dem Meeresboden befinden, während ein zweites Installationsteil - Verbindungselement und Drehvorrichtung - an einem ferngesteuerten, auf dem Wasserspiegel schwimmenden Unterwasserfahrzeug angebracht sein kann, wobei die Greifvorrichtungen des Verbindungselements, die hülsenförmig sein können, drehfest mit dem Verbindungselement verbunden sind. Das Fahrzeug mit dieser Last wird dann in Tauchstellung abgelassen und zum ersten Installationsteil - beispielsweise zu zwei zu verbindenden Rohrflanschen -hinuntergeführt, wobei die genannten Flansche zusammengeführt werden, und zwar so, daß das Verbindungselement die Flansche umgibt. Danach werden die Flansche verbunden, indem die Schrauben des Verbindungselements mit Hilfe der Drehvorrichtung angezogen werden, wonach das Verbindungselement und die Drehvorrichtung vom Fahrzeug gelöst und auf dem Meeresboden zurückgelassen werden. Das Fahrzeug wird dann wieder an die Wasseroberfläche zurückgebracht.

Wenn das erste und zweite Installationsteil getrennt werden sollen, wird das Fahrzeug zu den Installationsteilen hinuntergeführt und dabei so manövriert, daß das Endstück jeder Schraube jeweils in eine Hülse eingeführt wird und die Drehvorrichtung mit seinem Rahmen am Fahrzeug befestigt werden. Daraufhin wird die Drehvorrichtung so bedient, daß sich das Verbindungselement löst, wonach das Fahrzeug mit der Drehvorrichtung und dem Verbindungselement wieder an die Oberfläche gebracht wird.

Das ferngesteuerte Fahrzeug trägt dann das zweite Installationsteil - die Drehvorrichtung und das Verbindungselement -, wobei beide Teile seitlich am Fahrzeug befestigt sind. Dabei wird das Fahrzeug sowohl durch das Gewicht der Last als auch durch das statische Kraftmoment, das von der Last auf das Fahrzeug ausgeübt wird, belastet. Die bei dieser Technik verwendeten Bauteile können sehr schwer und auch sehr sperrig sein und es ist daher von großer Bedeutung, daß eine Drehvorrichtung der genannten Art so klein und leicht wie nur möglich ist, damit die Kapazität des Fahrzeugs im Hinblick auf die Tragfähigkeit und Stabilität nicht überschritten wird.

Es sind bereits Drehvorrichtungen bekannt, bei denen das Kupplungsgehäuse im Verhältnis zum Rahmen unbeweglich angebracht ist und die Greifvorrichtungen aus verhältnismäßig langen, hülsenförmigen Universalgelenken bestehen, die sicherstellen sollen, daß die Endstücke der Schrauben von der Greifvorrichtung trotz eventueller Abweichungen von den Nennmaßen hinsichtlich des Abstandes zwischen den Längsachsen der Schrauben und deren Parallelität aufgenommen werden können.

Weiter stellen die Kupplungen Sperrvorrichtungen dar, und weil das von den Kupplungen zu erzeugende Drehmoment groß sein kann, werden diese auf eine Reihe von Sperrelementen aufgeteilt, die gleichzeitig mit einer Zahnreihe in Eingriff stehen müssen. Zum Lösen des Verbindungselements müssen deren Schrauben im Verhältnis zur Drehrichtung während des Anziehens in umgekehrter Richtung gedreht werden. Es muß daher möglich sein, die Drehrichtung der Drehvorrichtung zu ändern. Aufgrund der vielen Sperrelemente wird eine solche Wendevorrichtung jedoch sehr kompliziert und umfaßt viele zusammenwirkende Einzelteile, die mit geringer Toleranz gefertigt werden müssen und daher auch sehr teuer werden. Ferner ist eine solche Drehvorrichtung schwer, und aufgrund der langen Universalgelenke befindet sich der Schwerpunkt des Verbindungselements und des zweiten Installationsteils in ziemlich großem Abstand vom Fahrzeug, so daß das von der Last gegen das Fahrzeug ausgeübte Kippmoment ebenfalls groß wird.

Der Erfindung liegt die Aufgabe zugrunde, eine Drehvorrichtung anzugeben, welche die obengenannten Mängel vermeidet.

Diese Aufgabe wird bei einer Drehvorrichtung der eingangs genannten Art erfindungsgemäß dadurch gelöst, daß die Kupplungseinheit ein Gehäuse hat, das im Rahmen beweglich gelagert ist. Auf diese Weise kann die Greifvorrichtung eng an die Kupplungseinheit herangerückt werden, so daß eine kompakte Einheit entsteht.

Dabei ist das Gehäuse vorteilhafterweise um Achsen kippbar, die zumindest annähernd in einer Ebene liegen, welche zentral durch die Kupplungseinheit, parallel zur Rotationsebene der Greifvorrichtung verläuft, wobei das Gehäuse in einer Ebene verschiebbar ist, welche die Drehachse umfaßt.

Die erfindungsgemäße Vorrichtung kann in der Weise ausgestaltet sein, daß die Kupplungseinheit ein erstes Ringteil und ein zweites Ringteil besitzt, und die Ringteile zur Rotationsachse der Greifvorrichtung konzentrisch angeordnet und im Gehäuse drehbar gelagert sind, so daß sie sich um diese Achse drehen können, daß die zwei Ringteile axial gegeneinandergerichtete Zähne haben, daß die Ringteile axial gegeneinander verschiebbar sind und zwar zwischen einer ersten Position, in der die Zähne der Ringteile miteinander in Eingriff stehen und einer zweiten Position, in der die Zähne nicht miteinander in Eingriff stehen. Dadurch werden das Volumen und das Gewicht der Drehvorrichtung klein gehalten.

Eine günstige Ausgestaltung der erfindungsgemäßen Vorrichtung wird dadurch erreicht, daß das erste Ringteil mit der Greifvorrichtung und das zweite Ringteil mit der Antriebsvorrichtung fest verbunden ist, daß das zweite Ringteil und das Gehäuse zusammenwirkende Anschläge zur Begrenzung der Drehbewegung dieses Ringteils gegenüber dem Gehäuse bei jedem Drehvorgang haben, und daß die Antriebsvorrichtung so ausgebildet ist, daß wechselweise in entgegengesetzte Richtung wirkende Drehmomente gegen das zweite Ringteil ausgeübt werden, wobei das Ringteil sich in einer vorgegebenen ersten Position befinden kann, wenn das Drehmoment während eines ersten Drehvorgangs gegen das zweite Ringteil ausgeübt wird und in einer zweiten Position, wenn das Drehmoment während eines zweiten Drehvorgangs in entgegengesetzter Richtung wirkt oder umgekehrt.

Es ist vorteilhaft, wenn das zweite Ringteil mindestens eine Öse hat, die annähernd in der zentralen Rotationsebene radial nach außen gerichtet ist, und die Antriebsvorrichtung eine entsprechende Anzahl doppeltwirkender Hydraulikzylinder umfaßt, wobei der Zylinderteil gelenkig mit der Öse und der Kolbenteil gelenkig mit dem Rahmen oder umgekehrt verbunden sind.

Zum Drehen zweier Gegenstände in gegenläufiger Richtung um zueinander zumindest annähernd parallel verlaufende Drehachsen, insbesondere zur Anbringung und zum Drehen von zwei Rechts - bzw. Linksgewindeschrauben eines zweiteiligen Verbindungselements kann das zweite Ringteil der zwei zu jeder der Schrauben gehörenden Kupplungseinheiten zwei diametral gegenüberliegende Ösen haben, die annähernd in der zentralen Rotationsebene und zu jeder Seite einer Verbindungslinie zwischen den Drehachsen der Kupplungen radial nach außen gerichtet sein, wobei der Zylinderteil und der Kolbenteil der zwei Hydraulikzylinder gelenkig mit den jeweiligen, auf gleicher Seite der Verbindungslinie liegenden Ösen der zweiten Ringteile verbunden sind.

Nachfolgend wird ein Ausführungsbeispiel der Erfindung anhand der Zeichnung beschrieben. Es wird eine Vorrichtung gemäß der Erfindung gezeigt, die für das Drehen von zwei Rechts- bzw. Linksgewindeschrauben eines zweigeteilten Verbindungselements ausgebildet sind.

Es zeigen:

Fig. 1 einen Grundriß einer Vorrichtung gemäß Erfindung, und zwar teilweise im Schnitt nach der Linie I-I in Figur 2,

Fig. 2 einen Aufriß der in Figur 1 gezeigten Vorrichtung und zwar in Richtung des Pfeils A und teilweise im Schnitt,

Fig. 3 einen vergrößerten Ausschnitt des in Figur 2 gezeigten Aufrisses,

Fig. 4 zeigt einen vergrößerten Ausschnitt des in Figur 1 gezeigten Grundrisses,

Fig. 5 einen horizontalen Längsschnitt durch eine der Kupplungseinheiten der Vorrichtung,

Fig. 6 einen vertikalen Längsschnitt durch die Ringteile der Kupplungseinheit und

Fig. 7 einen Längsschnitt durch einen Endabschnitt einer Greifhülse.

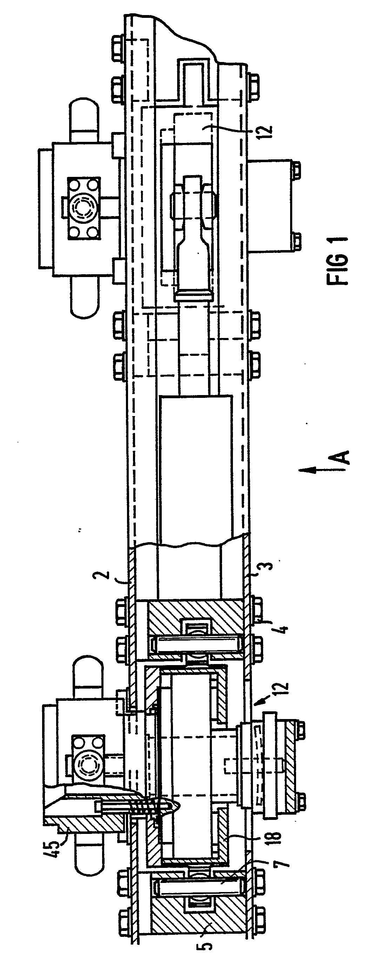

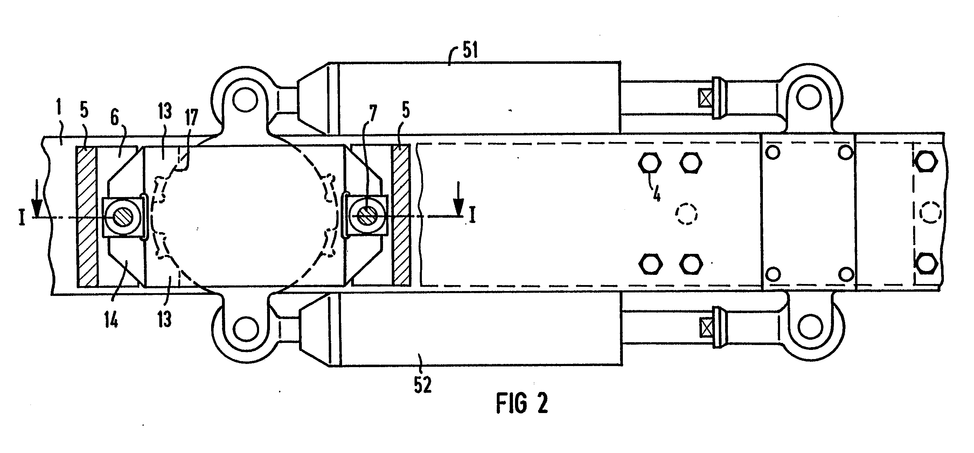

In der folgenden Beschreibung ist vorausgesetzt, daß die erfindungsgemäße Vorrichtung sich in einer Stellung befindet, in der die Drehachsen für die Greifvorrichtungen in der gleichen Horizontalebene liegen. weiterhin ist unter rchter oder linker Seite der Vorrichtung die rechte oder linke Seite dieser Vorrichtung zu verstehen, wie sie aus Abb. 1 und 2 hervorgeht. Unter Längsrichtung der Vorrichtung ist die Richtung der Drehachsen der Greifvorrichtungen zu verstehen.

Wie in den Figuren 1 und 2 gezeigt, umfaßt die Vorrichtung einen Rahmen 1 mit einer vorderen Platte 2 und einer hinteren Platte 3. Zwischen den beiden Platten 2, 3 sind mittels Schrauben 4 ein rechtes und ein linkes Paar von im Horizontalschnitt U-förmigen Lagerklötzen 5 befestigt. Innerhalb der Paare sind die Lagerklötze 5 mit gegeneinander gewendeten Schenkeln 6 angeordnet.

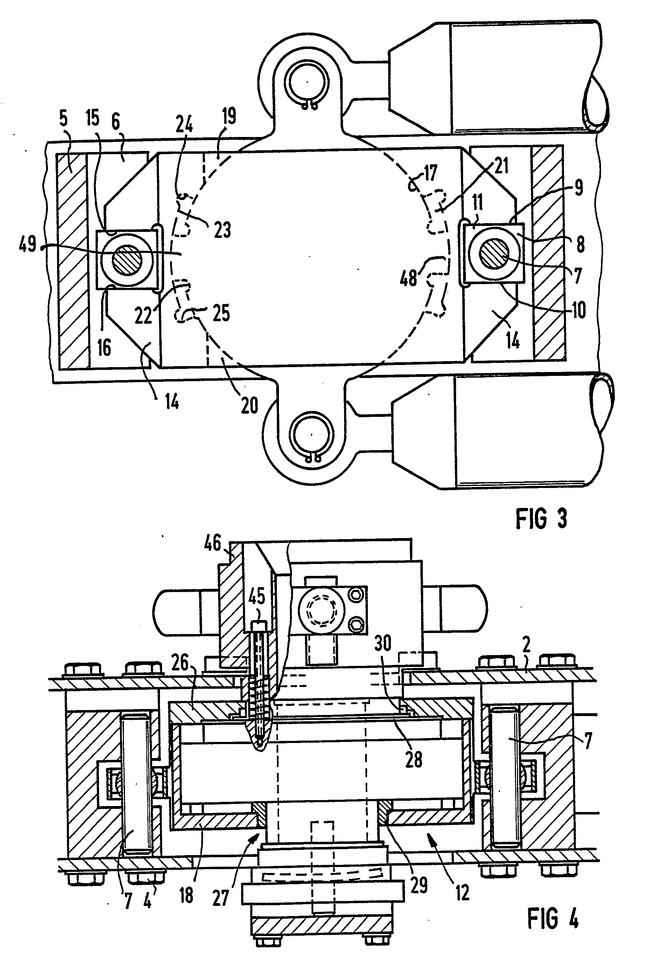

Durch die in Längsrichtung der Vorrichtung verlaufende Öffnung in den Schenkeln 6 jedes Lagerklotzes 5 erstreckt sich ein zylindrischer Stift 7, der im Abschnitt zwischen den Schenkeln 6 ein Pendelkugellager 8 (Fig. 3, 4) trägt. Der Außenring 11 des Lagers 8 hat oben und unten waagrechte Anlageflächen 9, 10. Zwischen den Lagerklötzen 5 jedes Klotzpaars befindet sich eine Kupplungseinheit 12, die ein Gehäuse 13 mit gabelförmigen Lagerösen 14 umfaßt, die zwischen die Schenkel 6 der Lagerklötze 5 hineinragen, wobei die Lagerösen 14 ebene Anlageflächen 15, 16 haben, die dazu vorgesehen sind, auf den Anlageflächen 9 bzw. 10 des Pendelkugellagers 8 zu gleiten. Die Abmessung der Lagerösen 14 in Längsrichtung der Vorrichtung ist etwas geringer als der Abstand zwischen den Schenkeln 6 der Lagerklötze 5.

Der Abstand zwischen den Bodenflächen, die zwischen den Zinken der gabelförmigen Lagerösen jedes Gehäuses 13 (Fig. 2) liegen, ist wiederum etwas geringer als der Abstand zwischen den gegeneinander gewendeten Oberflächen der Lager Außenringe 11 der Lager in den Paaren der Lagerklötze 5.

Das Gehäuse 13 hat eine im wesentlichen zylindrische, nach vorne offene Bohrung 17 sowie eine hintere Endwand 18. Von der zylindrischen Bohrung aus erstrecken sich eine obere durchgehende Aussparung 19 und untere durchgehende Aussparung 20. (Fig. 3)

Weiterhin erstrecken sich von der Bohrung 17 aus eine rechte Aussparung 21 (Tasche) und eine linke Aussparung 22, (Tasche) jeweils mit einem zylindrischen und im Verhältnis zur Bohrung 17 koaxial verlaufenden Bodenabschnitt 23, der von einer oberen radial verlaufenden Schulter 24 (Anlagefläche) und einer unteren radial verlaufenden Schulter 25 (Anlagefläche) abgeschlossen wird.

Am vorderen Teil des Gehäuses 13 ist mit Hilfe von Schrauben eine vordere Endwand (Stirnwand) 26 angebracht (Fig. 4).

In koaxial zur Bohrung 17 verlaufenden Bohrungen 27 und 28 sind in den Endwänden 18 und 26 ein hinteres Gleitlager 29 und ein vorderes Gleitlager 30 (Fig.4, 5 und 6) angeordnet, in denen ein erstes Ringteil 31 im Gehäuse 13 drehbar und verschiebbar gelagert ist. Dieses hat einen radial nach außen gegen die Innenwand des Gehäuses 13 gerichteten Abschnitt 35 mit einer Reihe von nach hinten gewendeten, radial verlaufenden Zähnen 33.

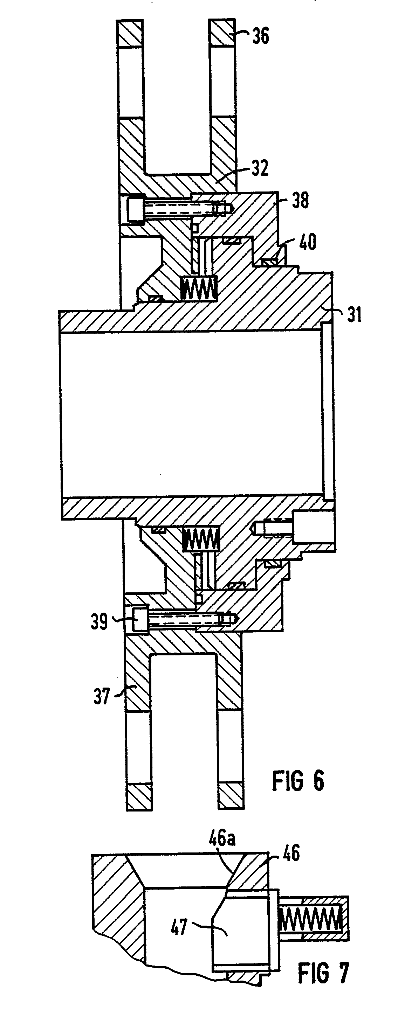

Radial außerhalb des ersten Ringteils 31 ist ein zweites Ringteil 32 angeordnet, und zwar mit einer Reihe nach vorne gewendeter, radial verlaufender Zähne 34, vorgesehen für den gleichzeitigen Eingriff in die Zähne 33 des ersten Ringteils 31. Weiterhin hat das zweite Ringteil 32 zwei Paar Ösen 36, 37 (Figur 6), die durch die Aussparungen 19 bzw. 20 (Figur 4) des Gehäuses 13 nach oben bzw. unten ragen und zwei Anschläge 48, 49, die radial nach rechts oder links gerichtet sind, und zwar in die jeweiligen Aussparungen (Taschen) 21 und 22 des Gehäuses 13 hinein, wo sie gegen die Endflächen (Schultern) 24, 25 zur Anlage kommen.

Ein drittes Ringteil 38 umgibt den radial herausragenden Abschnitt 35 des ersten Ringteils 31 und ist durch Schrauben 39 (Figur 6) mit dem zweiten Ringteil 32 verbunden. Das erste Ringteil 31 hat außen zylindrische Gleitflächen, die mit inneren Gleitflächen des zweiten und dritten Ringteils zusammenwirken. In den Ringteilen sind Dichtungsringe 40, die an den angrenzenden Gleitflächen anliegen, so angebracht, daß das erste Ringteil 31 eine Abdichtung darstellen und sich im Verhältnis zum zweiten und dritten Ringteil 32, 38 drehen und axial verschieben kann, und zwar zwischen einer ersten Position, in der die Zähne 33, 34 der Ringteile 31, 32 ineinander eingreifen und einer zweiten Position, in der die Zähne nicht ineinander eingreifen.

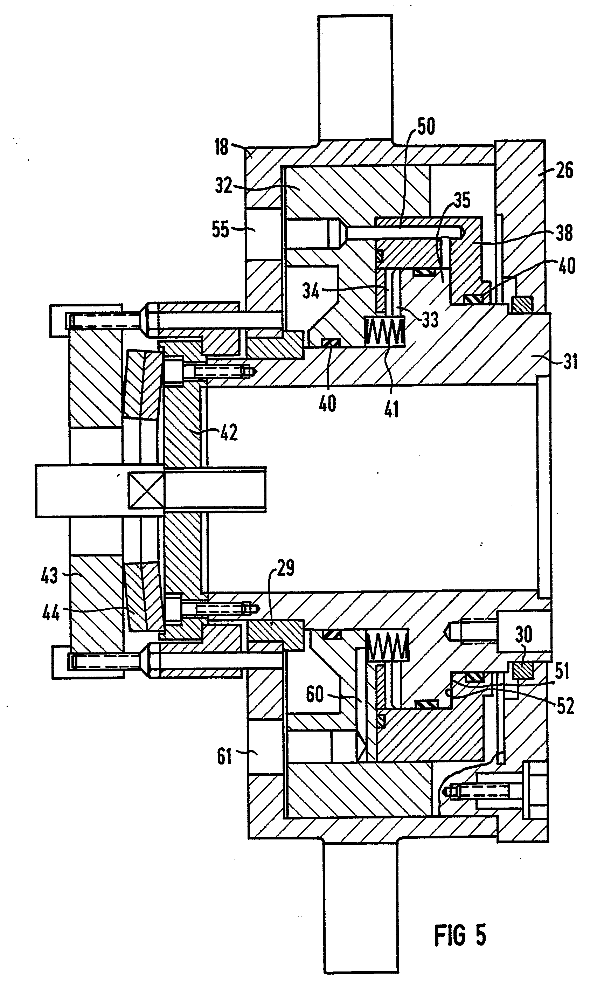

Zwischen dem ersten und dem zweiten Ringteil ist eine Reihe von Druckfedern 41 (Figur 5) angebracht, die danach streben, diese Ringteile axial auseinanderzudrücken.

Im zweiten Ringteil 32 und dritten Ringteil 38 befinden sich Bohrungen, die nach Verschrauben der Ringteile einen Kanal 50 bilden, wobei ein Endabschnitt des Kanals 50 eine Verbindung mit einem hydraulischen Aggregat herstellen soll, das Drucköl über eine beispielsweise kreisförmige Öffnung 55 in der hinteren Wand 18 liefert, und wobei der andere Endabschnitt an übereinander liegenden, radial verlaufenden Flächen 53 und 54 des ersten bzw. dritten Ringteils 31 und 38 ausmündet. Das in den Kanal 50 und zwischen diese Flächen einströmende Drucköl strebt dann danach, das erste Ringteil 31 nach unten und das zweite und dritte Ringteil nach oben zu drücken, wodurch die Zähne 33, 34 der Ringteile miteinander in Eingriff gebracht werden, während die Federn 41 danach streben, diese wieder aus dem Eingriff zu bringen.

Wahlweise kann auch ein weiterer Kanal 56 im zweiten Ringteil 32 vorgesehen werden, wobei der eine Endabschnitt des Kanals 56 zur Verbindung mit einem Aggregat ausgebildet sein kann, das Drucköl über eine beispielsweise kreisförmige Öffnung 57 im Gehäuse liefert, wobei das andere Ende des Kanals 56 in den Raum zwischen den Zähnen der Ringteile ausmünden kann, und zwar so, daß das erste und zweite Ringteil auseinandergedrückt werden, wenn Drucköl in den Kanal 56 einströmt. Die Dichtungsringe 40 sorgen dabei für die Abdichtung der Kammern, denen Drucköl zugeführt wird.

Am hinteren Endabschnitt des ersten Ringteils 31 ist eine erste Scheibe 42 angebracht, und an der hinteren Endwand 18 des Gehäuses 13 ist eine zweite Scheibe 43 drehfest, jedoch axial verschiebbar im Verhältnis dazu angebracht. Zwischen den Scheiben sind zwei Tellerfedern 44 angeordnet, und zwar so, daß es bei gegenläufigem Verdrehen des ersten Ringteils 31 und des Gehäuses 13 zwischen diesen Teilen zu einer Reibungswirkung kommt.

Am vorderen Endabschnitt des ersten Ringteils 31 ist mit Hilfe von Schrauben 45 (Figur 4) eine Greifhülse 46 mit einem radial verschiebbaren und radial nach innen abgefederten Keil 47 (siehe Figur 7) befestigt.

Der Bohrungsdurchmesser der Greiferhülse 46 ist auf den Durchmesser des Endstücks von nicht gezeigten Schrauben von Verbindungselementen, z.B. Rohrverbindern abgestimmt, und der Keil 47 ist dazu vorgesehen, beispielsweise in eine axial verlaufende Nut der genannten Schrauben eingeführt zu werden, so daß eine drehfeste Verbindung zwischen der Greifhülse und der zugehörigen Schrauben hergestellt wird. Weiterhin ist der äußere Endabschnitt der Bohrung der Greiferhülse 46 abgefaßt.

Zwei doppeltwirkende Hydraulikzylinder 51, 52 (Figur 2) sind über die Pendelkugellager 8 mit den oberen Ösen 36 (Figur 6) bzw. den unteren Ösen 37 des zweiten Ringteils 32 verbunden, wobei das Zylinderteil der Hydraulikzylinder 51, 52 mit den Ösen der linken Kupplungseinheit 12 verbunden ist (Figur 2) und das Kolbenteil mit den Ösen der rechten Kupplungseinheit 12. Die Hydraulikzylinder 51, 52 sind mit einem nicht gezeigten hydraulischen Aggregat verbunden, das an und für sich als bekannt vorausgesetzt werden kann und an das zur sequentiellen Steuerung der Ölzufuhr zu den Kanälen 50 (Figur 5) und den Hydraulikzylindern 51,52 eine hier nicht gezeigte Steuereinheit angeschlossen werden kann.

Die Funktionsweise wird nachfolgend näher beschrieben, wobei vorausgesetzt wird, daß die Verbindungselemente durch Drehen der linken Schraube im Uhrzeigersinn gelöst werden und die Vorrichtung so angeordnet ist, daß die Längsachse der Greifhülse annähernd mit der Längsachse der jeweiligen Schrauben zusammenfällt.

Zu Beginn wird die Vorrichtung so verschoben, daß die Enden der Schrauben gegen die jeweiligen Greifhülsen bewegt werden, um darin eingeführt zu werden, wobei die Fase 46a der Hülsenbohrung (Figur 7) das Einführen erleichtert. Falls die Abstände zwischen den Längsachsen der Schrauben (oder deren Parallelität) von den Nennmaßen abweichen, läßt die Anordnung der Pendelkugllager 8 für das Gehäuse 13 eine individuelle Kippbewegung der Kupplungseinheiten um eine horizontale Mittelachse zu. Die zusammenwirkenden Außenringe 11 und die Lagerösen 14 gestatten außerdem eine individuelle Kippbewegung (Abwinkelung) der Kupplungseinheiten um eine vertikale Mittelachse durch die jeweilige Kupplungseinheit, und das Spiel zwischen den Lagerösen 14 und den Pendelkugellagern 8 ermöglicht eine individuelle Verschiebung der Kupplungseinheiten in Querrichtung, und zwar so, daß die Schrauben leicht ganz in die Greifhülsen 46 eingeführt werden können.

Danach wird Drucköl in den Kanal 50 eingeleitet, wobei die Zähne 33, 34 des ersten und zweiten Ringteils 31, 32 in Eingriff gebracht werden. Dann wird den Hydraulikzylindern 51, 52 Drucköl zugeführt, so daß der obere Hydraulikzylinder 51 sich verkürzt und der untere sich verlängert, was dazu führt, daß die linke Schraube im Uhrzeigersinn gedreht wird, während die rechte Schraube zum Lösen des Verbindungselements in entgegengesetzter Richtung gedreht wird, bis die Anschläge 48, 49 (Figur 3) gegen zwei der Schultern 24, 25 der Aussparungen 21, 22 zur Anlage kommen.

Falls die Keile 47 der Greifhülsen während des Einführvorgangs nicht in die zugehörigen Nuten der Schrauben der Verbindungselemente eingeführt und die Schrauben bei der anfänglichen Bewegung der Hydraulikzylinder daher nicht gedreht worden sind, bewirkt ein weiteres Drehen bei diesem oder einem späteren Drehvorgang eine solche Einführung, und zwar sobald die Keile und Nuten in eine Stellung gelangen, in der sie sich gegenüberliegen.

Beim Abbau des Öldrucks in Kanal 50 gehen die Zähne des ersten und zweiten Ringteils 31, 32 außer Eingriff, beispielsweise aufgrund der von den Druckfedern 41 ausgeübten Kraft. Dann kann Öl unter Druck den Hydraulikzylindern 51, 52 zugeführt werden, so daß sich jetzt der obere Hydraulikzylinder 51 verlängert und der untere verkürzt. Dabei wird das zweite Ringteil 32 der linken Kupplungseinheit im Gegenuhrzeigersinn gedreht und das zweite Ringteil 32 der rechten Kupplungseinheit im Uhrzeigersinn, bis die Anschläge 48, 49 gegen die anderen Schultern der Aussparungen 21, 22 zur Anlage kommen, während das erste Ringteil 31 in Ruhestellung ist. Beim Drehen während dieses Rücklaufvorgangs verhindert die von den Tellerfedern 44 bewirkte Reibung zwischen den Scheiben 42, 43 ein unabsichtliches Drehen des ersten Ringteils 31 und damit der Schrauben der Verbindungselemente.

Eine erneute Zufuhr von Drucköl zum Kanal 50 und danach zu den Hydraulikzylindern 51, 52 zur Verlängerung des unteren Hydraulikzylinders 52 und Verkürzung des oberen führt dazu, daß die Schrauben erneut danach streben, sich zum weiteren Lösen der Verbindungselemente zu drehen. Die erwähnten Arbeitsmomente werden dann wiederholt, bis die Verbindungselemente ganz gelöst sind.

Zum Aneinanderklammern der Verbindungselemente ist die Reihenfolge der Arbeitsmomente umgekehrt, wobei Drucköl während des Dreh- oder Anziehvorgangs zuerst dem Kanal 50 zugeführt wird, wodurch das erste und das zweite Ringteil gegeneinander bewegt und in Eingriff gebracht werden. Danach wird Drucköl den Hydraulikzylindern zugeführt, wodurch sich der obere verlängert und der untere verkürzt. Die linke Schraube der Verbindungselemente wird dabei im Gegenuhrzeigersinn gedreht und die rechte im Uhrzeigersinn, bis die Anschläge 48, 49 gegen zwei der Schultern 24, 25 zum Anliegen kommen.

Nach Abbau des Öldrucks in Kanal 50 und Aufhebung des Eingriffs zwischen dem ersten und dem zweiten Ringteil wird Drucköl den Hydraulikzylindern zugeführt, und zwar so, daß sich der obere Hydraulikzylinder verkürzt und der untere verlängert. Dabei wird das zweite Ringteil der linken und der rechten Kupplungseinheit im Uhrzeigersinn bzw. im Gegenuhrzeigersinn gedreht, ohne daß die Greifhülsen und Schrauben gedreht werden. Diese Arbeitsmomente stellen den Rücklaufvorgang dar. Durch mehrmaliges Wiederholen des Drehvorganges und Rücklaufvorganges werden die Schrauben schließlich ausreichend angezogen.

Nach mehrmaliger Wiederholung kommt es dazu, daß eines der zweiten Ringteile 32 beim Anziehen der Schrauben während des Drehvorgangs sich nicht mehr weiter drehen läßt, auch wenn die Anschläge 48, 49 der zugehörigen Kupplungseinheit nicht mehr an ihren Schultern anliegen. Das auf die Schraube ausgeübte Drehmoment entspricht dann dem im Verhältnis zum eingestellten Öldruck richtigen Anzugsmoment der Schraube. Um auch die zweite Schraube auf das richtige Anzugsmoment anzuziehen, werden die Dreh- und Rücklaufvorgänge wiederholt, wobei nur diese Schraube bewegt wird.

Aus obiger Beschreibung geht hervor, daß die Vorrichtung gemäß der Erfindung bei individueller Gestaltung auch für Anlagen mit nur einer Schraube eingesetzt werden kann, z.B. wenn das eine Teil des Hydraulikzylinders direkt über ein Gelenk mit dem Rahmen anstatt mit einer der Kupplungseinheiten verbunden ist. Beim Drehen von zwei Schrauben ist es von Vorteil, wenn die Schrauben im Verhältnis zueinander gegenläufige Gewinde haben. Die Vorrichtung kann jedoch auch so ausgeführt werden, daß zwei Schrauben mit gleichläufigem Gewinde gedreht werden, wobei z.B. das Kolbenteil des oberen Hydraulikzylinders durch ein Gelenk mit den unteren gabelförmigen Ösen 36 des zweiten Ringteils der rechten Kupplungseinheit verbunden ist und das Kolbenteil des unteren Hydraulikzylinders gelenkig mit den oberen gabelförmigen Ösen 36 dieses Ringteils verbunden ist, und zwar über weitere, dazwischenliegende Arme, die fest mit den Kolbenstangen verbunden sind.

**Ansprüche**

1. Vorrichtung zum stufenweisen Drehen mindestens eines Gegenstandes, insbesondere einer Schraube eines zweiteiligen Verbindungselements zum Zusammenfügen zweier Rohre unter Wasser, bei der für jeden Gegenstand an einem Rahmen (1) eine Greifvorrichtung (46) für eine drehfeste Verbindung mit dem Gegenstand und eine im Rahmen (1) untergebrachte Kupplungseinheit (12) angeordnet sind, die mit der Greifvorrichtung (46) verbunden ist und diese trägt, wobei mit der Kupplungseinheit (12) eine Antriebsvorrichtung (51, 52) zum Drehen der Greifvorrichtung (46) verbunden ist, **dadurch gekennzeichnet,** daß die Kupplungseinheit (12) ein Gehäuse (13) hat, das im Rahmen (1) beweglich gelagert ist.

2. Vorrichtung nach Anspruch 1, **dadurch gekennzeichnet,** daß das Gehäuse (13) um Achsen kippbar ist, die zumindest annähernd in einer Ebene liegen, welche zentral durch die Kupplungseinheit (12), parallel zur Rotationsebene der Greifvorrichtung (46) verläuft, und daß das Gehäuse (13) in einer Ebene verschiebbar ist, welche die Drehachse umfaßt.

3. Vorrichtung nach Anspruch 1 oder 2, **dadurch gekennzeichnet,** daß die Kupplungseinheit (12) ein erstes Ringteil (31) und ein zweites Ringteil (32) umfaßt, und die Ringteile (31, 32) zur Rotationsachse der Greifvorrichtung konzentrisch angeordnet und im Gehäuse drehbar gelagert sind, so daß sie sich um diese Achse drehen können, daß die zwei Ringteile (31, 32) axial gegeneinandergerichtete Zähne haben, und daß die Ringteile (31, 32) axial gegeneinander verschiebbar sind und zwar zwischen einer ersten Position, in der die Zähne (33, 34) der Ringteile miteinander in Eingriff stehen und einer zweiten Position, in der die Zähne nicht miteinander in Eingriff stehen.

4. Vorrichtung nach einem der Ansprüche 1 bis 3, **dadurch gekennzeichnet,** daß das erste Ringteil (31) mit der Greifvorrichtung (46) und das zweite Ringteil (32) mit der Antriebsvorrichtung (51, 52) fest verbunden ist, daß das zweite Ringteil (32) und das Gehäuse (13) zusammenwirkende Anschläge (24, 25, 48, 49) zur Begrenzung der Drehbewegung dieses Ringteils (32) gegenüber dem Gehäuse (13) bei jedem Drehvorgang haben, und daß die Antriebsvorrichtung (51, 52) so ausgebildet ist, daß wechselweise in entgegengesetzte Richtung wirkende Drehmomente gegen das zweite Ringteil (32) ausgeübt werden, wobei das Ringteil sich in einer vorgegebenen ersten Position befinden kann, wenn das Drehmoment während eines ersten Drehvorgangs gegen das zweite Ringteil ausgeübt wird und in einer zweiten Position, wenn das Drehmoment während eines zweiten Drehvorgangs in entgegengesetzter Richtung wirkt oder umgekehrt.

5. Vorrichtung nach einem der vorhergehenden Ansprüche, **dadurch gekennzeichnet,** daß das zweite Ringteil (32) mindestens eine Öse (36, 37) hat, die annähernd in der zentralen Rotationsebene radial nach außen gerichtet ist, und daß die Antriebsvorrichtung eine entsprechende Anzahl doppeltwirkender Hydraulikzylinder (51, 52) umfaßt, wobei der Zylinderteil gelenkig mit der Öse (36) und der Kolbenteil gelenkig mit dem Rahmen (1) oder umgekehrt verbunden sind.

6. Vorrichtung nach Anspruch 5 zum Drehen zweier Gegenstände in gegenläufiger Richtung um zueinander zumindest annähernd parallel verlaufende Drehachsen, insbesondere zur Anbringung und zum Drehen von zwei Rechts- bzw. Linksgewindeschrauben eines zweiteiligen Verbindungselements, **dadurch gekennzeichnet,** daß das zweite Ringteil (32) der zwei zu jeder der Schrauben gehörenden Kupplungseinheiten (12) zwei diametral gegenüberliegende Ösen (36,37) hat, die annähernd in der zentralen Rotationsebene und zu jeder Seite einer Verbindungslinie zwischen den Drehachsen der Kupplungen radial nach außen gerichtet sind, und daß der Zylinderteil und der Kolbenteil der zwei Hydraulikzylinder (51, 52) gelenkig mit den jeweiligen, auf gleicher Seite der Verbindungslinie liegenden Ösen der zweiten Ringteile verbunden sind (Figur 1).

P 8607 E

FIG 1

P 8607 E

FIG 2

P 8607 E

FIG 3

FIG 4

P 8607 E

FIG 5

P 8607 E

36

32

38

40

31

39

37

FIG 6

46a

46

47

FIG 7